# EUROPÄISCHE PATENTSCHRIFT

(11) **EP 1 163 275 B1**
(45) Veröffentlichungstag und Bekanntmachung des Hinweises auf die Patenterteilung: **17.11.2004**
(21) Anmeldenummer: 00902667.5
(22) Anmeldetag: 09.02.2000
(51) Int. Cl.: C08F 8/04, C08F 8/00

(54) **VINYLCYCLOHEXAN BASIERENDE POLYMERE**
POLYMERS BASED ON VINYLCYCLOHEXANE
POLYMERES A BASE DE VINYLCYCLOHEXANE

(30) Priorität: 19.02.1999 DE 19906984
(43) Veröffentlichungstag der Anmeldung: 19.12.2001
(73) Patentinhaber: Bayer MaterialScience AG, 51368 Leverkusen (DE); TEIJIN LIMITED, Osaka-shi, Osaka 541-0054 (JP)
(72) Erfinder: WEGE, Volker, D-41470 Neuss (DE); CHEN, Yun, D-47800 Krefeld (DE); BRUDER, Friedrich-Karl, D-47802 Krefeld (DE); DUJARDIN, Ralf, D-47877 Willich (DE)
(74) Vertreter: Klimiuk-Japadita, Meike
(86) Internationale Anmeldenummer: PCT/EP2000/001027
(87) Internationale Veröffentlichungsnummer: WO 2000/049057

(56) Entgegenhaltungen:
- EP-A- 0 322 731
- WO-A-94/21694
- WO-A-99/32528

## Beschreibung

Die vorliegende Erfindung betrifft Vinylcyclohexan (VCH) basierende Polymere und Copolymere mit überwiegend isotaktischer Konfiguration und ein Verfahren zu deren Herstellung und deren Verwendung als optisches Material. Die Werkstoffe können durch Extrusion oder Spritzguß zu Formkörpem verarbeitet werden und eignen sich besonders als Substrat für optische Materialien, Prismen, Linsen und Compact Discs.

Als Substrat für optische Materialien können transparente Kunststoffe wie aromatisches Polycarbonat, Polymethylmethacrylat oder Polystyrol, verwendet werden. Auch Additionscopolymere aus Ethylen und einem Norbornenderivat oder einem Tetracyclododecenderivat sowie hydrierte Produkte von ringgeöffneten Metathesepolymeren aus Norbomen - oder Tetracyclododecen kommen in Frage.

Optische Materialien aus einem Hydrierprodukt eines Polymers aus einer Alkenylaromatischen Kohlenwasserstoffverbindung oder einem Copolymer davon sind in GB 933,596 (= DE-AS 1 131 885) EP-A 317 263, US 4,911,966 und US 5,178,926 beschrieben. Ein Hinweis auf die Konfiguration ist nicht zu entnehmen.

Die Hydrierung von Polystyrol wurde erstmalig von Hermann Staudinger 1929 beschrieben. Neuere Patentliteratur beschäfigt sich mit der zugrundeliegenden Mikrostruktur von Polyvinylcyclohexan bzw. hydriertem Polystyrol. Stand des Wissens ist, daß amorphe Vinylcyclohexan-Polymere eine ataktische Konfiguration und kristalline VCH (Vinylcyclohexan) Polymere entweder isotaktische oder syndiotaktische Konfiguration besitzen (EP-A 0 322 731, EP-A 0 423 100, US-A 5,654,253; US-A 5,612,422; WO 96/34896). Isotaktisches PVCH (Polyvinylcyclohexan) wird in Gegenwart von Ziegler Katalysatoren hergestellt, und besitzt einen hohen Schmelzpunkt (J. Polym. Sci., A2, 5029 (1964). EP-A 0 322 731 beschreibt, daß Vinylcyclohexan-Polymere mit syndiotaktischer Konfiguration durch Hydrierung von syndiotaktischem Polystyrol kristallin sind, wobei die Menge der Diaden wenigstens 75 % und die Menge der Pentaden wenigstens 30 % betragen. WO 94/21694 beschreibt ein Verfahren zur Herstellung von hydrierten Poly(alkykenyl-aromatischen) Polymeren und Poly(alkenyl-aromatischen)/Polydien Blockcopolymeren. Syndiotaktisches Polystyrol wird allgemein erwähnt.

Verfahren die zu isotaktischen, syndiotaktischen und ataktischen hydriertem Polystyrol führen, welche die bisher bekannten Materialeigenschaften zeigen werden in WO 94/21694, US-A 5,352,744 beschrieben, wobei spezielle Katalysatoren eingesetzt werden. Verfahren zur Hydrierung von ataktischem Polystyrol zu ataktischem hydrierten Polystyrol durch die Verwendung spezieller Katalysatoren werden beschrieben in US-A 5,654,253; US-A 5,612,422; WO 96/34896.

Ataktische Polymere sind reguläre Polymere. Sie besitzen definitionsgemäß die möglichen konfigurativen Grundbausteine in gleichen Mengen, mit ideal-statistischer Verteilung von Molekül zu Molekül (IUPAC). Sie zeichnen sich durch die gleiche Zahl an iso- und syndiotaktischen Diaden aus. Es wird ein amorphes Material mit nur einer Glasstufe ohne kristallinen Anteil beschrieben.

Gegenstand der Erfindung ist ein Vinylcyclohexan basierendes Polymer oder Copolymer, wobei als Comonomere Olefine, Acrylsäurederivate, Maleinsäurederivate, Vinylether oder Vinylester bei der Herstellung eingesetzt werden können, mit isotaktischer Konfiguration, dadurch gekennzeichnet, daß die Menge an Diaden größer als 50,1 % und kleiner als 74 %, besonders bevorzugt 51-70%, ist. Die Vinylcyclohexan basierenden Polymere sind amorphe Polymere.

Die erfindungsgemäßen Polymeren zeichnen sich durch hohe Transparenz, geringe Doppelbrechung und hohe Wärmeformbeständigkeit aus und lassen sich daher als Substratmaterial für optische Datenspeicher einsetzen. Das bekannte und isotaktische PVCH, hergestellt durch Ziegler Natta Katalysatoren mit einem Anteil isotaktischer Diaden >75% ist aufgrund seiner Kristallinität für optische Anwendungen ungeeignet (J. Polymer Sci, A2, 5029 (1964)).

Gegenstand der Erfindung sind hydrierte Produkte von Polystyrol, die zu einem amorphen hydrierten Polystyrol mit einem Überschuß der isotaktischen Diaden führt.

Das Vinylcyclohexanpolymer dieser Erfindung ist ein neues amorphes Polymer mit einer definierten Stereostruktur, das sich durch das überwiegende Auftreten der isotaktischen Diadenkonfiguration auszeichnet und kann durch das beschriebene Verfahren hergestellt werden.

Bevorzugt ist ein Vinylcyclohexan basierendes Polymer mit der wiederkehrenden Struktureinheit der Formel (I) 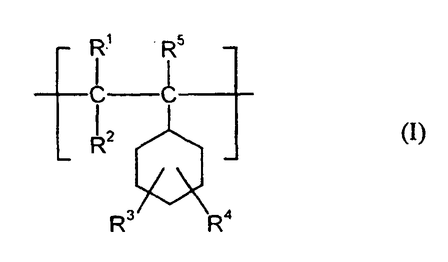 in welcher
- R¹ und R²: unabhängig voneinander für Wasserstoff oder C₁-C₆-Alkyl, vorzugsweise C₁-C₄-Alkyl stehen und
- R³ und R⁴: unabhängig voneinander für Wasserstoff oder für C₁-C₆-Alkyl, vorzugsweise C₁-C₄-Alkyl, insbesondere Methyl und/oder Ethyl, oder R³ und R⁴ gemeinsam für Alkylen, vorzugsweise C₃- oder C₄-Alkylen (ankondensierter 5- oder 6-gliedriger Cycloaliphatischer Ring) stehen,
- R⁵: für Wasserstoff oder C₁-C₆-Alkyl, vorzugsweise C₁-C₄-Alkyl,
- R¹, R² und R⁵: stehen unabhängig voneinander insbesondere für Wasserstoff oder Methyl.

Die Verknüpfung kann außer der stereoregulären Kopf-Schwanz Verknüpfung einen geringen Anteil Kopf-Kopf Verknüpfung aufweisen. Das Vinylcyclohexan basierende amorphe überwiegend isotaktische Polymer kann über Zentren verzweigt sein und z.B. eine sternförmige Struktur besitzen.

Als Comonomere können bei der Polymerisation des Ausgangspolymeren (gegebenenfalls substituiertes Polystyrol) vorzugsweise verwendet und in das Polymer miteingebaut werden: Olefine mit im allgemeinen 2 bis 10 C-Atomen, wie beispielsweise Ethylen, Propylen, Isopren, Isobutylen, Butadien, C₁-C₈- vorzugsweise C₁-C₄-Alkylester der Acryl- bzw. Methacrylsäure, ungesättigte cycloaliphatische Kohlenwasserstoffe, z.B. Cyclopentadien, Cyclohexen, Cyclohexadien, gegebenenfalls substituiertes Norbomen, Dicyclopentadien, Dihydrocyclopentadien, gegebenenfalls substituierte Tetracyclododecene, kernalkylierte Styrole, α-Methylstyrol, Divinylbenzol, Vinylester, Vinylsäuren, Vinylether, Vinylacetat, Vinylcyanide wie beispielsweise Acrylnitril, Methacrylnitril, Maleinsäureanhydrid und Mischungen dieser Monomere. Im allgemeinen können bis zu 60 Gew.-%, bevorzugt bis zu 50 Gew.-%, besonders bevorzugt bis zu 40 Gew.-%, (bezogen auf das Polymere) Comonomere enthalten sein. Ganz besonders bevorzugt können die Vinylcyclohexanpolymere 1 bis 30 Gew.-% Comonomere enthalten.

Das erfindungsgemäße amorphe Vinylcyclohexan-Polymer weist einen isotaktischen Diadenanteil, ermittelt durch zwei dimensionale NMR-Spektroskopie, von 50,1 bis 74 %, vorzugsweise von 51 - 70 % aus. Verfahren zur Mikrostrukturaufklärung anhand von ¹³C-¹H Korrellationsspektroskopie der Methylen Kohlenstoffatome eines Polymerrückgrates sind allgemein bekannt und werden z.B. von A.M.P. Ros und O. Sudmeijer beschrieben (A.M.P. Ros, O. Sudmeijer, Int. J. Polym. Anal. Charakt. (1997), 4, 39.).

Die Signale von kristallinen isotaktischen und syndiotaktischen Polyvinylcyclohexan werden mittels zweidimensionaler NMR Spektroskopie bestimmt. Das Methylen-Kohlenstoffatom (im Polymerrückgrat) des isotaktischen Polyvinylcyclohexan spaltet im 2 D-CH-Korrelationsspektrum in zwei separierte Protonen Signale auf und zeigt die reine isotaktische Diadenkonfiguration. Isotaktisches Polyvinylcyclohexan zeigt dagegen für das Kohlenstoffatom C 1 nur ein Signal im 2 D-CH-Korrelationsspektrum. Das erfindungsgemäße amorphe isotaktisch reiche Polyvinylcyclohexan besitzt einen integralen Intensitätsüberschuß der isotaktischen Diaden gegenüber der syndiotaktischen Diaden-Konfiguration.

Es besitzt eine hohe Wärmeformbeständigkeit, eine niedrige Wasseraufnahme, bei ausreichenden mechanischen Eigenschaften und ist daher ein ideales Material für optische Anwendungen.

Die Vinylcyclohexan(co)polymere haben im allgemeinen absolute Molekulargewichte Mw Gewichtsmittel von >1000, vorzugsweise von 1500 - 400 000, ganz besonders bevorzugt 1500 - 380 000, bestimmt nach Lichtstreuung .

Vinylcyclohexan(co)polymere mit geringerem Molekulargewicht sind besonders bevorzugt solche mit absoluten Molekulargewichten Mw (Gewichtsmittel) von 1 500 bis 20 000.

Die erfindungsgemäßen Vinylcyclohexan basierenden Homopolymere haben im allgemeinen eine Glastemperatur >90°C, vorzugsweise >95°C, ermittelt durch DSC.

Die Copolymere können sowohl statistisch als auch als Blockcopolymere vorliegen.

Die Polymere können eine lineare Kettenstruktur besitzen als auch durch Co-Einheiten Verzweigungsstellen aufweisen (z.B. Pfropfcopolymere). Die Verzweigungszentren beinhalten z.B. sternförmige oder verzweigte Polymere. Die erfindungsgemäßen Polymere können andere geometrische Formen der primären, sekundären, tertiären, ggf. quartären Polymerstruktur aufweisen hierbei seinen genannt Helix, Doppelhelix, Faltblatt usw. bzw. Mischungen dieser Strukturen.

Blockcopolymere beinhalten Di-Blöcke, Tri-Blöcke, Multi-Blöcke und sternförmige Blockcopolymere.

Die VCH-(Co)Polymere werden hergestellt, indem man Derivate des Styrols mit den entsprechenden Monomeren radikalisch, anionisch, kationisch, oder durch Metallkomplex-Initiatoren bzw. Katalysatoren polymerisiert und die ungesättigten aromatischen Bindungen anschließend vollständig oder teilweise hydriert (vgl. z.B. WO 94/02720, EP-A 322 731). Sie zeichnen sich durch das überwiegende Auftreten der isotaktischen Konfiguration der Vinylcyclohexaneinheiten der vorliegenden Erfindung aus.

Das Verfahren führt im allgemeinen zu einer praktisch vollständigen Hydrierung der aromatischen Einheiten. In der Regel ist der Hydriergrad ≥ 80 %, vorzugsweise ≥ 90 %, ganz besonders bevorzugt ≥ 99 % bis 100 %. Der Hydriergrad läßt sich beispielsweise durch NMR oder UV-Spektroskopie bestimmen.

Die Ausgangspolymere sind allgemein bekannt (z.B. WO 94/21 694).

Die einzusetzende Menge an Katalysator ist beispielsweise in WO 96/34896 beschrieben.

Die eingesetzte Menge des Katalysators hängt von dem ausgeführten Prozeß ab, dieser kann kontinuierlich, halb-kontinuierlich oder diskontinuierlich durchgeführt werden.

Im kontinuierlichen System ist die Reaktionszeit wesentlich kürzer; sie wird von den Abmessungen des Reaktionsgefäßes beeinflußt. Bei der kontinuierlichen Arbeitsweise sind das Rieselsystem und das Sumpfsystem, beide mit fest angeordneten Katalysatoren, ebenso möglich wie ein System mit suspendiertem und z.B. im Kreis geführten Katalysator. Die festangeordneten Katalysatoren können z.B. in Tablettenform oder als Extrudate vorliegen.

Die Polymerkonzentrationen, bezogen auf das Gesamtgewicht aus Lösungsmittel und Polymer betragen im allgemeinen 80 bis 1, vorzugsweise 50 bis 10, insbesondere 40 bis 15 Gew.-%.

Die Hydrierung der Ausgangspolymere wird nach allgemein bekannten Methoden durchgeführt (z.B. WO 94/21 694, WO 96/34 895, EP-A-322 731). Als Katalysatoren können eine Vielzahl von bekannten Hydrierkatalysatoren eingesetzt werden. Bevorzugte Metallkatalysatoren sind beispielsweise in WO 94/21 694 oder WO 96/34 896 genannt. Als Katalysator kann jeder für Hydrierreaktion bekannter Katalysator eingesetzt werden. Geeignet sind Katalysatoren mit großer Oberfläche (z.B. 100 - 600 m²/g) und kleinem mittleren Porendurchmesser (z.B. 20 - 500 Å). Weiterhin sind auch Katalysatoren mit kleiner Oberfläche (z.B. ≥10 m²/g) und großen mittleren Porendurchmessern geeignet, die dadurch charakterisiert sind, daß 98 % des Porenvolumens, Poren mit Porendurchmessern größer 600 Å aufweisen (z.B. ca. 1 000 - 4 000 Å) (vgl. z.B. US-A 5.654.253, US-A 5.612.422, JP-A 03076706). Insbesondere werden Raney-Nickel, Nickel auf Siliciumdioxid oder Siliciumdioxid/Aluminiumoxid, Nickel auf Kohlenstoff als Träger und/oder Edelmetallkatalysatoren auf Siliciumdioxid, Siliciumdioxid/Aluminiumoxid und Aluminiumoxid insbesondere Pt, Ru, Rh, Pd, verwendet.

Die Reaktion wird im allgemeinen bei Temperaturen zwischen 0 und 500°C, vorzugsweise zwischen 20 und 250°C, insbesondere zwischen 60 und 200°C, durchgeführt.

Die für Hydrierreaktionen üblichen Lösungsmitteln verwendbaren Lösungsmitteln sind beispielsweise in DE-AS 1 131 885 beschrieben (siehe oben).

Die Reaktion wird im allgemeinen bei Drücken von 1 bar bis 1000 bar, vorzugsweise 20 bis 300 bar, insbesondere 40 bis 200 bar, durchgeführt.

Die erfindungsgemäßen auf Vinylcyclohexan basierenden Polymere oder Copolymere eignen sich ausgezeichnet zur Herstellung von optischen Materialien, z.B. Linsen, Prismen und optischen Discs.

Als optische Datenspeicher werden beispielhaft genannt:
- Magneto-optische Disc (MO-Disc)
- Mini-Disc (MD)
- ASMO (MO-7) ("Advanced storage magnetooptic")
- DVR (12 Gbyte Disc)
- MAMMOS-("Magnetic Amplifying magneto optical system")
- SIL and MSR ("Solid immersion lens" and "magnetic superresolution")
- CD-ROM (Read only memory)
- CD, CD-R (recordable), CD-RW (rewritable), CD-I (interactive), Photo-CD
- Super Audio CD
- DVD,DVD-R (recordable), DVD-RAM (random access memory); DVD=Digital versatile disc
- DVD-RW (rewritable)
- PC + RW (Phase change and rewritable)
- MMVF (multimedia video file system)

Die erfindungsgemäßen Polymere sind aufgrund ihrer hervorragenden optischen Eigenschaften weiterhin besonders geeignet zur Herstellung von optischen Materialien, z.B. für Linsen, Prismen, Spiegel, Farbfilter etc. Ferner als Medien für halographische Abbildungen (z.B. Scheck-, Kredit-Karten, Ausweise, dreidimensionale holografhische Bilder). Die Materialien können als transparente Medien zum Einschreiben dreidimensionaler Strukturen z.B. aus fokusierter kohärtenter Strahlung (LASER) insbesondere als dreidimensionale Datenspeicher oder zur dreidimensionalen Abbildung von Gegenständen eingesetzt werden.

Das Material kann üblicherweise anstelle oder in Verbindung mit Glas bis Gebrauchstemperaturen von 145°C eingesetzt werden. Außenanwendungen für die transparenten Materialien sind Überdachungen, Fensterscheiben, Folien, Verglasung von Gewächshäuser z.B. in Form von Doppelstegplatten. Weitere Anwendungen sind Abdeckungen zum Schutz mechanisch empfindlicher Systeme bei gleichzeitig hoher Transparanz z.B. im Bereich Photovoltatik, insbesondere Solarzellen oder Sonnenkollektoren. Die erfindungsgemäßen Kunststoffe können mit anderen Materialien beschichtet werden insbesondere mit Nanopartikeln zur Erhöhung der Kratzfestigkeit, Metallen und anderen Polymeren.

Anwendungen für den Haushalt sind zum Beispiel transparente Verpackungsmaterialien mit geringer Wasserdurchlässigkeit, extrusions- oder spritzgußhergestellte Haushaltsgegenstände z.B. Becher und Behälter. Ferner Haushaltsgeräte sowie transparente Lampenabdeckungen.

Die Kunststoffe können als temperaturbeständige Hartschäume zur Isolation im Bau- und Technikbereich (Haus- und Geräteisolation z.B. für Kühlschränke) eingesetzt werden und zum Beispiel Polystyrol- und Polyurethan-Schaum ersetzen. Ein Vorteil ist die hohe Dauergebrauchstemperatur.

Aufgrund der geringen Dichte (d <1) und der daraus resultierenden Gewichtsersparnis sind die Materialien besonders geeignet für Anwendungen in der Automobil-, Luft- und Raumfahrtindustrie für Instrumententafeln, transparente Abdeckungen von Instrumenten Systemen sowie von Lichtquellen, Bordverglasung und Isolationsmaterial.

Die Materialien sind Isolatoren für elektrischen Strom und eignen sich daher für die Herstellung von Kondensatoren (z.B. Dielektrika), elektronische Schaltkreise und Gerätegehäuse. Weitere Anwendungen in der Elektroindustrie bestehen insbesondere aufgrund der Kombination von hoher optischer Transparenz bei hoher Wärmeformbeständigkeit, geringer Wasseraufnahme in Verbindung mit Licht aus geeigneten emitierenden Quellen. Die Materialien eignen sich daher für die Herstellung von Leuchtdioden, Laserdioden, Matrizes für organische, anorganische und polymere elektrolumineszierende Materialien, optoelektrische Signalaufnahmegeräte, Datenübertragungssysteme durch Glasfaserersatz (z.B. polymere Lichtwellenleiter), transparente Materialien für elektronische Anzeigemedien (Bildschirme, Displays, Projektionsapparate) z.B. von flüssigkristallinen Substraten.

Die Materialien eignen sich für Anwendungen in der Medizintechnik für transparente Extrusions- oder Spritzgußartikel für sterile und unsterile Analysengefäße, Petrischalen, Mikrofilterplatten, Objektträger, Schläuche, Beatmungstubi, Kontaktlinsen, Brillengläser und Behälter von z.B. Infusionslösungen oder Medikamentenlösungen, Extrusions- und Spritzgußartikel für Anwendungen im Blutkontakt insbesondere zur Herstellung von Spritzen, Kanülen, Katheter, Kurz- und Langzeitimplantaten (z.B. künstliche Linsen), Blutschläuchen, Membranen zur Blutwäsche, Dialysatoren, Oxygenatoren, transparenten Wundabdeckungen, Blutkonserven und Nahtmaterialien.

### Beispiele

### Beispiel 1

Der Autoklave wird mit Inertgas (Argon) gespült. Die Polymerlösung und der Katalysator werden zugegeben (Tabelle 1). Nach dem Verschließen wird mehrmals mit Schutzgas dann mit Wasserstoff beaufschlagt. Nach dem Entspannen wird der jeweilige Wasserstoffdruck eingestellt und unter Rühren auf die entsprechende Reaktionstemperatur geheizt. Der Reaktionsdruck wird nach Einsetzen der Wasserstoffaufnahme konstant gehalten.

Nach beendeter Reaktion wird die Polymerlösung filtriert. Das Produkt wird in Methanol gefällt und bei 120°C getrocknet. Das isolierte Produkt zeigt die in der Tabelle 2 aufgeführten physikalischen Eigenschaften.

### Vergleichsbeispiel A

### Syndiotaktisches Polyvinylcyclohexan

Ein ausgeheizter unter Argon stehender 250 ml Dreihalskolben mit Rückflußkühler wird der Reihe nach mit 50 ml abs. Toluol, 20 ml Methylaluminoxan (10%ige Lösung in Toluol), 16,5 mg (0,075 mmol) Titancyclopentadienyltrichlorid und 10,4 g (0.1 mol) Styrol gefüllt. Die Reaktionsmischung wird auf 50 °C aufgeheizt und 2 h bei dieser Temperatur gehalten. Die Reaktion wird durch die Zugabe von acidem Methanol beendet. Das Polymer wird mit 200 ml Methanol mehrmals gewaschen und bei 80 °C getrocknet.

12.5 g Palladium auf Bariumsulfat werden mit Wasserstoff reduziert und mit Schutzgas inertisiert. Ein 1L-Druckreaktor wird mit Inertgas gespült. In den Autoklaven werden 2.5 g syndiotaktisches Polystyrol gelöst in Cyclohexan und der Katalysator zugegeben (Tabelle 1). Der Wasserstoffdruck wird auf 50 bar eingestellt und der Ansatz auf 200 °C geheizt. Nach 24 Stunden wird die Reaktion beendet, entspannt und die Polymerlösung wird filtriert. Das Filtrat wird in Methanol gefällt und im Vakuum bei 120 °C getrocknet. Das isolierte Produkt zeigt die in der Tabelle 2 aufgeführten physikalischen Eigenschaften.

### Vergleichsbeispiel B

### Isotaktisches Polyvinylcyclohexan

In einen ausgeheizten, mit Inertgas gefüllten 1L-Dreihalskolben mit Rückflußkühler werden 100 ml abs. Toluol, 12,5 g (0.11 mol) Vinylcyclohexan und 5 mmol Triethylaluminium bei Raumtemperatur überführt.

1 ml Triethylaluminium (IM) und 2 ml Titan(IV)chlorid (IM) in 12,5 ml Toluol werden 30 Minuten bei 80 °C gerührt und in die Monomerlösung gegeben.

Die Reaktionsmischung wird auf 60 °C aufgeheizt, 50 Minuten bei dieser Temperatur gerührt und anschließend für 90 min bei 85 °C gehalten. Die Polymerisation wird durch Zugabe von Methanol beendet. Das Produkt wird in Methanol unter Rückfluß gekocht, abfiltriert, anschließend mit Methanol und Aceton gewaschen. Das Polymer wird bei 60 °C im Vakuum getrocknet. Das Produkt zeigt die in der Tabelle 2 aufgeführten physikalischen Eigenschaften.

### Vergleichsbeispiel C

### Polycarbonat aus 2,2-Bis(4-hydroxyphenyl)propan

Ein 150 µm dicker Film von Polycarbonat auf Basis von 2,2-Bis-(4-hydroxyphenyl)propan (Makrolon CD 2005, Bayer AG) wird durch Schmelzpressen hergestellt. An diesem Film wird eine Glastemperatur von 142 °C und eine rheooptische Konstante von +5,4 GPa⁻¹ gemessen (vgl. Tabelle 2).

**Tabelle 1**

| Hydrierung von Polystyrol mit unterschiedlicher Taktizität | | | | | | | |
|---|---|---|---|---|---|---|---|
| Beispiel-Nr. | Polymer-Masse G | Lösungsmittel ml | Katalysator-Masse g | Reakions-temp. °C | Wasserstoff-Druck bar | Reaktionszeit h | Hydriergrad.¹⁾ % |
| 1 | 2,5²⁾ | 300 ml Cyclohexan | 12,5³⁾ | 200 | 50 | 6 | 100 |
| A | 2,5 | 300 ml Cyclohexan | 12,5⁴⁾ | 200 | 85 | 24 | 100 |

| | | | | | | | |
|---|---|---|---|---|---|---|---|
| 1) Ermittelt durch ¹H-NMR Spektroskopie | | | | | | | |
| 2) Polystyrol, Standard, Mw = 2500, Aldrich | | | | | | | |
| 3) Ni /SiO₂/Al₂O₃, 64-67 % Nickel, Aldrich | | | | | | | |
| 4) 5 % Palladium auf Bariumsulfat, Aldrich | | | | | | | |

**Tabelle 2**

| Thermische und optische Eigenschaften der verschiedenen Vinylcyclohexan Homopolymere | | | | | |
|---|---|---|---|---|---|
| Beispiel Nr. | isotakt. Diaden² % | Syndiotakt. Diaden² % | Glastemp. Tg °C | Schmelzpkt. Tm °C | Transparenz der Lösungsfilme +/- |
| 1 | 55 | 45 | 98 | - | + |
| A | <2 | > 98 | 126 | 295 | - |
| B | > 98 | <2% | -¹⁾ | 369 | - |
| C | - | - | 142 | - | + |

| | | | | | |
|---|---|---|---|---|---|
| 1) Durch DSC-Messungen nicht detektiert | | | | | |
| 2) Ermittelt durch zweidimensionale Kernresonanzspektroskopie (2D-NMR) | | | | | |

Das erfindungsgemäße amorphe Polyvinylcyclohexan (Beispiel 1) zeichnet sich durch das überwiegende Auftreten der isotaktischen Diaden aus. Das Material besitzt im Vergleich zu Polycarbonat ebenfalls eine hohe Transparenz bei hoher Wärmeformbeständigkeit (Glastemperatur). Die vorbeschriebenen syndiotaktischen und isotaktischen Materialien sind aufgrund deren Kristallinität und geringen Tranzparenz für optische Anwendungen ungeeignet.

## Patentansprüche

1. Vinylcyclohexan basierendes Polymer oder Copolymer, wobei die Comonomere ausgewählt sind aus mindestens einem Monomer der Gruppe der Olefine, Alkylester der Acrylsäure oder Methacrylsäure, Cyclopentadien, Cyclohexen, Cyclohexadien, gegebenenfalls substituiertes Norbomen, Dicyclopentadien, Dihydrocyclopentadien, gegebenenfalls substituierte Tetracyclododecene, kernalkylierte Styrole, α-Methylstyrol, Divinylbenzol, Vinylester, Vinylsäuren, Vinylether, Vinylacetat, Acrylnitril, Methacrylnitril, Maleinsäureanhydrid, bei der Herstellung eingesetzt werden können, mit isotaktischer Konfiguration, **dadurch gekennzeichnet, daß** die Menge an Diaden größer als 50,1, kleiner als 74 % ist.

2. Polymer gemäß Anspruch 1, wobei die Menge an Diaden 51 bis 70 % beträgt.

3. Polymer gemäß Anspruch 1, wobei das Vinylcyclohexan basierende Polymer eine wiederkehrende Struktureinheit der Formel 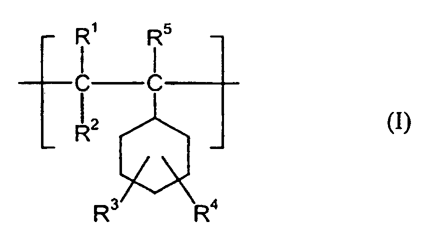 in welcher
R³ und R⁴ unabhängig voneinander für Wasserstoff oder C₁-C₆-Alkyl oder R³ und R⁴ gemeinsam für Alkylen stehen,
R¹, R² und R⁵ unabhängig voneinander für Wasserstoff oder C₁-C₆-Alkyl stehen,
aufweist.

4. Verwendung von Polymeren oder Copolymeren gemäß Anspruch 1 bis 3 zur Herstellung von optischen Datenspeichern, Formkörpern und Folien.

5. Optische Datenspeicher, erhältlich aus Vinylcyclohexan-basierenden Polymeren oder Copolymeren gemäß Anspruch 1.

6. Formkörper und Folien, erhältlich aus Vinylcyclohexan-basierenden Polymeren oder Copolymeren gemäß Anspruch 1.

## Claims

1. Vinylcyclohexane-based polymer or copolymer which has an isotactic configuration, wherein the comonomers which can be used for the production thereof are selected from at least one monomer of the group comprising olefines, alkyl esters of acrylic acid or methacrylic acid, cyclopentadiene, cyclohexene, cyclohexadiene, norbornene which is optionally substituted, dicyclopentadiene, dihydrocyclopentadiene, tetracyclododecene which is optionally substituted, styrenes comprising alkylated nuclei, α-methylstyrene, divinylbenzene, vinyl esters, vinylic acids, vinyl ethers, vinyl acetate, acrylonitrile, methacrylonitrile and maleic anhydride, **characterised in that** the amount of dyads is greater than 50.1 % and less than 74 %.

2. Polymer according to claim 1, wherein the amount of dyads is 51 to 70%.

3. Polymer according to claim 1, wherein the vinylcyclohexane-based polymer comprises a recurring structural unit of formula 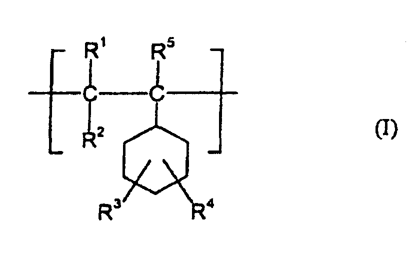 wherein
R³ and R⁴ , independently of each other, represent hydrogen or a C₁-C₆ alkyl, or R³ and R⁴ jointly represent an alkylene, and
R¹, R² and R⁵, independently of each other, represent hydrogen or a C₁-C₆ alkyl.

4. Use of polymers or copolymers according to claims 1 to 3 for the production of optical data storage media, mouldings and sheeting.

5. Optical data storage media obtainable from vinylcyclohexane-based polymers or copolymers according to claim 1.

6. Mouldings and sheeting obtainable from vinylcyclohexane-based polymers or copolymers according to claim 1.

## Revendications

1. Polymère ou copolymère à base de vinylcyclohexane, les comonomères utilisables à la préparation étant choisis parmi au moins un monomère du groupe des oléfines, des esters alkyliques de l'acide acrylique ou de l'acide méthacrylique, du cyclopentadiène, du cyclohexane, du cyclohexadiène, du norbornène éventuellement substitué, du dicyclopentadiène, du dihydrocyclopentadiène, des tétracyclododécènes éventuellement substitués, des styrènes alkylés dans le noyau, de l'α-méthylstyrène, du divinylbenzène, des esters vinyliques, des acides vinyliques, des éthers vinyliques, de l'acétate de vinyle, de l'acrylonitrile, du méthacrylonitrile, de l'anhydre maléique, et à configuration isotactique, **caractérisé en ce que** la quantité des diades est supérieure à 50,1 et inférieure à 74 %.

2. Polymère selon la revendication 1, pour lequel la quantité de diades va de 51 à 70 %.

3. Polymère selon la revendication 1, le polymère à base de vinylcyclohexane contenant un motif de structure répété de formule 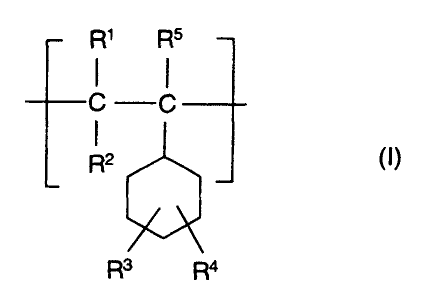 dans laquelle
R³ et R⁴ représentent chacun, indépendamment l'un de l'autre, l'hydrogène ou un groupe alkyle en C₁-C₆, ou bien R³ et R⁴ forment ensemble un groupe alkylène,
R¹, R² et R⁵ représentent chacun, indépendamment les uns des autres, l'hydrogène ou un groupe alkyle en C₁-C₆.

4. Utilisation de polymères ou copolymères selon les revendications 1 à 3 pour la fabrication de banques de données optiques, d'objets moulés et de feuilles.

5. Banques de données optiques obtenues à partir de polymères ou copolymères à base de vinylcyclohexane selon la revendication 1.

6. Objets moulés et feuilles obtenus à partir de polymères ou copolymères à base de vinylcyclohexane selon la revendication 1.
